# EUROPEAN PATENT SPECIFICATION

(11) **EP 1 647 152 B1**
(45) Date of publication and mention of the grant of the patent: **27.11.2013**
(21) Application number: 04753626.3
(22) Date of filing: 28.05.2004
(51) Int. Cl.: H04B 7/00, H04M 3/42

(54) **WIRELESS COMMUNICATIONS NETWORK AND METHOD FOR ENABLING WIRELESS PRESENCE-BASED SERVICES**
DRAHTLOSES KOMMUNIKATIONSNETZ UND VERFAHREN ZUR ERMÖGLICHUNG DRAHTLOSER DIENSTE AUF PRÄSENZBASIS
RESEAU DE COMMUNICATION SANS FIL ET PROCEDE POUR PERMETTRE DES SERVICES SANS FIL BASES SUR LA PRESENCE

(30) Priority: 11.07.2003 US 486684 P; 13.04.2004 US 823185
(43) Date of publication of application: 19.04.2006
(60) Divisional application: 10003121.0
(73) Proprietor: Motorola Mobility LLC, Libertyville, IL 60048 (US)
(72) Inventor: OPRESCU-SURCOBE, Valentin,, Northbrook, Illinois 60062 (US); SAYEEDI, Shahab M.,, Naperville, Illinois 60540 (US)
(74) Representative: Openshaw, Paul Malcolm
(86) International application number: PCT/US2004/016825
(87) International publication number: WO 2005/011298

(56) References cited:
- WO-A-03/032616
- WO-A1-95/12933
- WO-A2-01/72055
- WO-A2-02/43351
- US-A- 5 787 346
- US-A1- 2001 025 314
- US-B1- 6 246 872

## Description

### Field of the Invention

The present invention relates generally to wireless communication systems and, in particular, to enabling wireless presence-based services in such systems.

### Background of the Invention

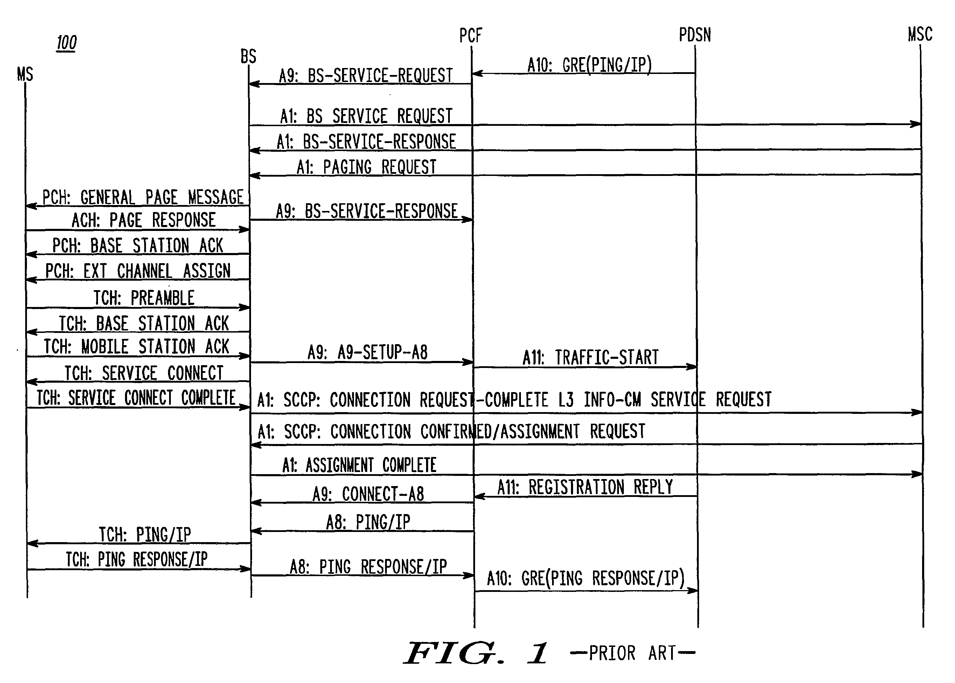

Presence services, such as instant messaging (IM), are well-known to Internet users. These services are also part of 3rd generation (3G) wireless offerings. However, the current wireless paradigm does not handle these services very efficiently. For example, existing presence servers typically maintain presence information by periodically pinging the target mobile station (MS) and use the response or lack of it, as a presence "heart beat" signal. FIG. 1 illustrates a simplified messaging exchange involved in pinging such an MS. As seen in messaging flow diagram 100, the presence server ping triggers, via the packet data serving node (PDSN), substantial messaging between the base station (BS), mobile switching center (MSC), MS, packet control function (PCF), and PDSN to finally deliver the ping response to the presence server (via the PDSN). As can be seen, this paging extensively involves the MSC and A interface. It also uses long (i.e., inefficient) pages on the wireless interface to the MS. The network and MS go through a full data session activation out of dormancy (i.e., call set up with the allocation of a TCH), a packet exchange, and a tearing-down of the connection.

Moreover, each individual service may track presence independent of other services. For example, different IM services may each perform their own pinging of the target MS to obtain substantially the same information. Given the inefficiencies involved in current presence implementations, a need exists for a wireless communications network and method that enable wireless presence-based services more efficiently.

WO 03/032616 A1 discloses a system and method for sharing user event information (such as presence on a network) among mobile (wireless) devices and those connected to fixed IP networks such as the Internet. The system and method support instant messaging between wireless devices and fixed IP network devices and between wireless devices and other wireless devices.

WP 95/12933 discloses a method and system for message signalling in a radiocommunication system. Privacy and urgency indicators and subaddressing can be provided to segregate messages in a hierarchical manner. User acknowledgement and reply functionality is incorporated.

### Brief Description of the Drawings

FIG. 1 is a messaging flow diagram of prior art messaging to support presence-based services.
FIG. 2 is a block diagram depiction of a wireless communication system in accordance with a first embodiment of the present invention.
FIG. 3 is a block diagram depiction of a wireless communication system in accordance with a second embodiment of the present invention.
FIG. 4 is a block diagram depiction of a wireless communication system in accordance with a more generalized embodiment of the present invention.
FIG. 5 is a messaging flow diagram of messaging to support presence-based services in accordance with the first embodiment of the present invention.
FIG. 6 is a logic flow diagram of functionality performed by a wireless communication system in accordance with a first embodiment of the present invention.

### Detailed Description of Embodiments

The need to enable wireless presence-based services more efficiently is addressed by embodiments of the present invention. In general, a wireless presence proxy (WPP) monitors the messaging and messaging responses of a mobile station (MS) via wireless transceiver equipment. Such messaging and messaging responses do not explicitly specify a presence state or state change for the MS. Thus, based upon this monitoring, the WPP infers the presence state / change for the MS and maintains MS location information. The WPP communicates any presence state changes and confirms MS presence state as required by the presence server(s) (225). By monitoring messaging, notifying the server(s) of MS presence, and handling server requests (potentially from many servers for the same MS), embodiments of the present invention reduce or avoid many existing inefficiencies, such as wide area paging and call set up and tear down for each presence ping, from each presence server.

The present invention encompasses a method for enabling wireless presence-based services in which a wireless communications network monitors messaging and messaging responses of a mobile station (MS). The messaging and the messaging responses do not explicitly specify a presence state of the MS or a presence state change by the MS. The wireless communications network infers a change in the presence state of the MS based upon the monitoring and communicates the state change to a presence server.

The present invention also encompasses a wireless communications network that includes wireless transceiver equipment adapted to receive messaging and messaging responses of a mobile station (MS). The wireless communications network also includes a wireless presence proxy (WPP), communicatively coupled to the wireless transceiver equipment. The WPP is adapted to monitor the messaging and the messaging responses of the MS, wherein the messaging and the messaging responses do not explicitly specify a presence state of the MS or a presence state change by the MS. The WPP is further adapted to infer a change in the presence state of the MS based upon the monitoring and to communicate the state change to a presence server.

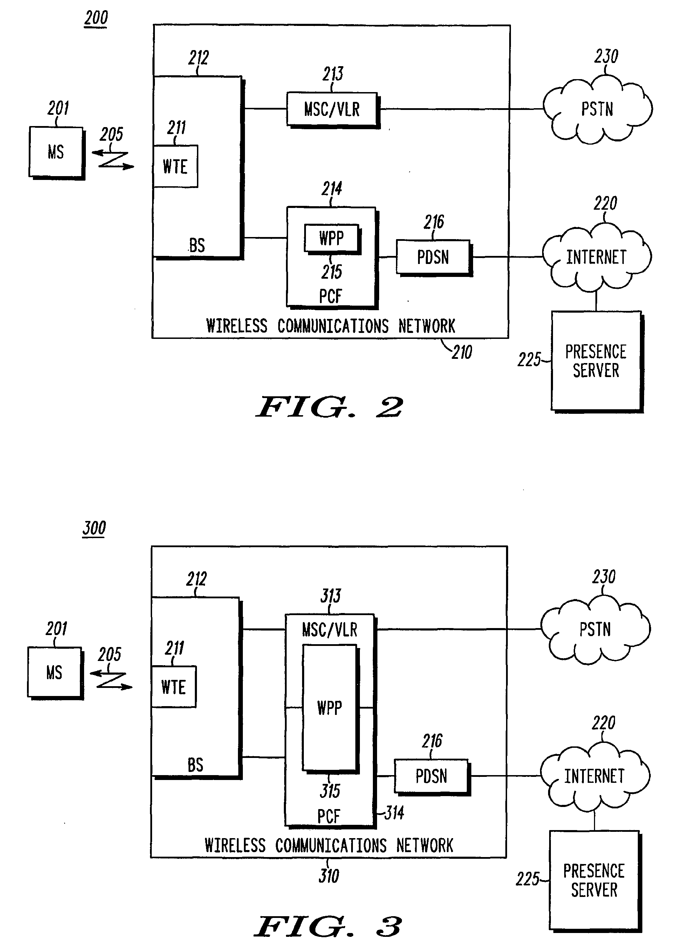

The disclosed embodiments can be more fully understood with reference to FIGs. 2-6. FIGs. 2-4 are a block diagram depictions of wireless communication systems 200, 300, and 400 in accordance with a first, a second, and a more generalized embodiment of the present invention, respectively. Systems 200, 300, and 400 are well-known Code Division Multiple Access (CDMA) systems, specifically CDMA 2000 systems, which are based on the Telecommunications Industry Association / Electronic Industries Association (TIA/EIA) standard IS-2000 and TIA-2001, suitably modified to implement the present invention. (The TIA/EIA can be contacted at 2001 Pennsylvania Ave. NW, Washington, D.C. 20006). Alternative embodiments of the present invention may be implemented in communication systems that employ other technologies such as, but not limited to, IS-136, IS-95, IS-833, WCDMA, HRPD (TIA-878-1 and TIA-1878), "iDEN," "WiDEN," GSM, GPRS, UMTS, and EDGE. Embodiments of the present invention include wireless communication networks 210, 310, and 410 and mobile stations (MSs) 201 and 401. They also include known entities such as presence server 225, internet network 220, and public switched telephone network 230. Although depicted as a single presence server, presence server 225 may represent multiple servers each for individual services such as IM and/or push-to-talk (PTT). Although depicted as mobile phones, MSs in the present invention are not limited to mobile phones. For example, an MS may comprise all manner of devices connected to the wireless communication network such as computers (e.g., desktops and laptops), personal data assistants (PDAs), gaming devices, etc.

Wireless communication networks 210, 310, and 410 communicate with MSs 201 and 401 via CDMA 2000 air interface resources 205 and 405, as depicted in FIGs. 2-4. Resource 205, for example, comprises a variety of well-known channel types, such as access channels, paging channels, and traffic channels. Some of these channels, such as traffic channels, are dynamically assigned and de-assigned to provide user services as requested and according well-known techniques and standards.

Those skilled in the art will recognize that FIGs. 2-4 do not depict all of the network equipment necessary for systems 200, 300, and 400 to operate but only those system components and logical entities particularly relevant to the description of embodiments of the present invention. For example, wireless communication network 410 is depicted as including wireless transceiver equipment (WTE) 411 and wireless presence proxy (WPP) 415. In some embodiments consistent with wireless communication network 410, WTE 411 is included within one or more base transceiver stations (BTSs), supporting the transmission and reception of messaging and messaging responses involving MS 401.

WPP 415 can be implemented using well-known components such as processors, memory, and/or logic circuitry designed to implement algorithms that have been expressed as computer instructions and/or in circuitry. Given an algorithm or a logic flow, those skilled in the art are aware of the many design and development techniques available to implement a WPP that performs the given logic. For example, a WPP consistent with the present invention may be implemented as a stand-alone system component (e.g., a control function), incorporated into well-known system components (such as a control function in an MSC or as depicted by WPP 215 in PCF 214, e.g.), or distributed across well-known system components (as depicted by WPP 315 distributed across MSC 313 and PCF 314, e.g.).

Wireless communication network 210 is depicted in accordance with the first embodiment of the present invention. Network 210 includes well-known system components MSCNLR 213 and PDSN 216. In addition, network 210 includes PCF 214, into which WPP 215 is incorporated, and BS 212, which includes WTE (such as WTE 211), BTSs, a base site controller (BSC), and a selection and distribution unit (SDU).

Operation of communication system 200 in accordance with an example useful for the understanding of the present invention occurs substantially as follows. WPP 215 monitors the messaging and messaging responses of MS 201, as received via WTE 211. The messaging responses include signaling such as page responses, short data burst (SDB) acknowledgments, status response messages, short message service (SMS) acknowledgments, and layer 2 acknowledgments. The messaging includes MS indications that it is powering up or down, registering or deregistering, entering or exiting an unavailable mode, handing off outside or into wireless communication network 210, or involved in or completing other communication. Such signaling is used today in systems that do not provide presence services. Thus, such messaging responses do not require specialized software in MS 201 nor do they explicitly specify a presence state of MS 201 or a presence state change by MS 201. As a result, WPP 215 infers the presence state and/or state change of MS 201 based upon its monitoring. WPP 215 then communicates this presence state and/or state change for MS 201 to presence server 225. This communication occurs via PDSN 216 and uses internet messaging and Session Initiation Protocol (SIP).

To infer the presence state / change of MS 201, WPP 215 monitors the messaging and messaging responses of MS 201. For example, if MS 201's presence state indicates that it is present, WPP 215 can infer that MS 201's presence state has changed to a non-present state when WPP 215 detects messaging indicating that MS 201 is powering down, deregistering, entering an unavailable mode, handing off outside wireless communication network 210, and involved in other communication. Similarly, if MS 201's presence state indicates that it is non-present, WPP 215 can infer that MS 201's presence state has changed to a present state when WPP 215 detects messaging indicating that MS 201 is powering up, registering, exiting an unavailable mode, handing off into the wireless communication network, and performing other communication.

In the first example, WPP 215 occasionally signals the MS with messaging to which the MS is required to respond. This signaling may be triggered by events such as a periodic timer expiration, the expiration of a timer set to a randomly chosen interval, or receiving a request (e.g., a ping request) from presence server 225. The messaging to which MS 201 is required to respond includes messaging such as a page, a short data burst (SDB) message, a status request message, and a short message service (SMS) message.

WPP 215 maintains (i.e., stores and/or updates) last-known-location information for MS 201 based on the messaging and the messaging responses WPP 215 monitors. This last-known-location information is a cell ID, in the first embodiment, although it may alternatively include a base station ID, a list of cell IDs, or a location area code (LAC). By storing location information in this manner, MS 201 can be signaled only in the cell (or cells) it is believed to be operating. This contributes to the efficiency of the first embodiment in supporting presence.

When WPP 215 receives a messaging response in response to the signaling it initiated, WPP 215 can infer that there is no change in the presence state of MS 201. It may be that MS 201 has changed location, i.e., MS 201 responds from a cell different than that indicated by WPP 215's last-known-location information for MS 201. In this case, WPP 215 updates its last-known-location information for MS 201. Also, WPP 215 may confirm the presence state of MS 201 (although it has not changed) to presence server 225. This confirmation may allow presence server 225 to reset its ping timer for MS 201. Likewise, WPP 215 may also use its inference that there is no change in the presence state of MS 201 to start or stop timers it uses for maintaining MS 201's presence state information.

WPP 215 may not receive a response to the signaling it initiated. WPP 215 will use a timer (or timers) to establish a response period in which to wait for a response, for any repeated signaling, and for attempts using other forms of signaling (such as MSC directed signaling, which is described below). When no response is received within the response period (i.e., a messaging response of no response), WPP 215 can infer a change in the presence state of MS 201 from present to non-present.

When WPP 215 initiates signaling to MS 201 according to its last-known-location information but BS 212 does not receive a response from MS 201, BS 212 requests MSC 213 to signal MS 201 using its paging area information for MS 201 (i.e., MSC directed signaling). If MS 201 has changed location, then MS 201 should respond, although from a cell different than that indicated by WPP 215's last-known-location information. In this way, MS 201's presence state can be confirmed and WPP 215's last-known-location information updated.

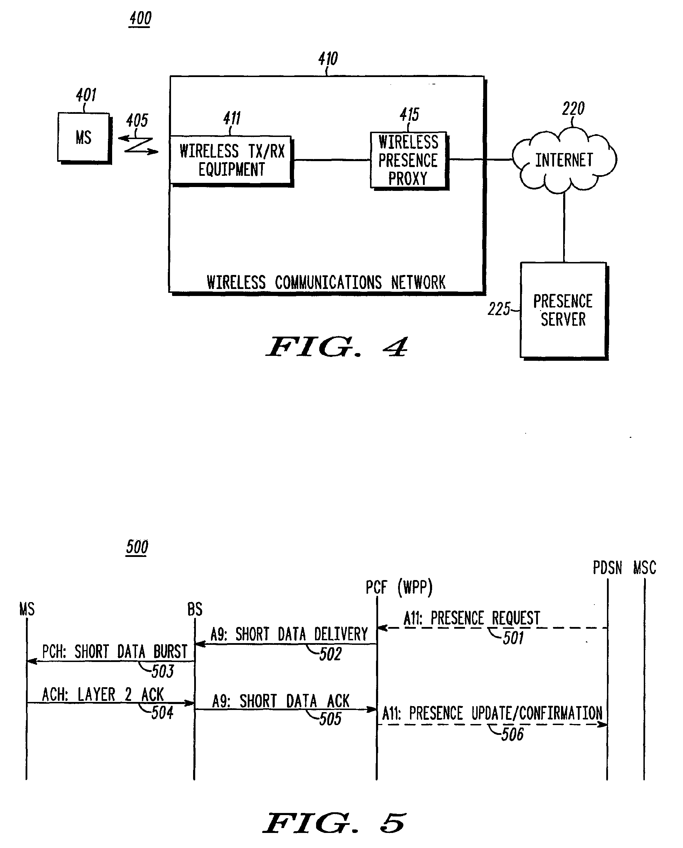

FIG. 5 is a messaging flow diagram of messaging to support presence-based services in accordance with the first embodiment of the present invention. WPP 215 may receive a request for MS 201's current status (such as presence request message 501) from presence server 225 (via PDSN 216). Instead, WPP 215 may itself occasionally (perhaps periodically) seek to confirm MS 201's presence status. Whatever the trigger, WPP 215 sends a signaling request message to BS 212, specifically, A9-Short Data Delivery message 502, which indicates a signaling location (e.g., a cell ID) within which to signal MS 201. BS 212 then signals MS 201 with Short Data Burst 503 on the paging channel in the cell indicated.

In the first embodiment, MS 201 responds on an access channel with layer 2 acknowledgment 504, which is received by BS 212. However, MS 201 need not have responded for BS 212 to send an indication to WPP 215 of whether or not a response from MS 201 was received. Specifically, BS 212 sends A9-Short Data Ack message 505 to WPP 215 indicating that MS 201 responded. From such messaging responses, WPP 215 can then infer MS 201's presence status. If necessary, WPP 215 updates or confirms this presence status with presence server 225 (via PDSN 216) using presence update/confirmation message 506. This presence server messaging is only necessary for presence state changes or when confirmation is requested by presence server 225.

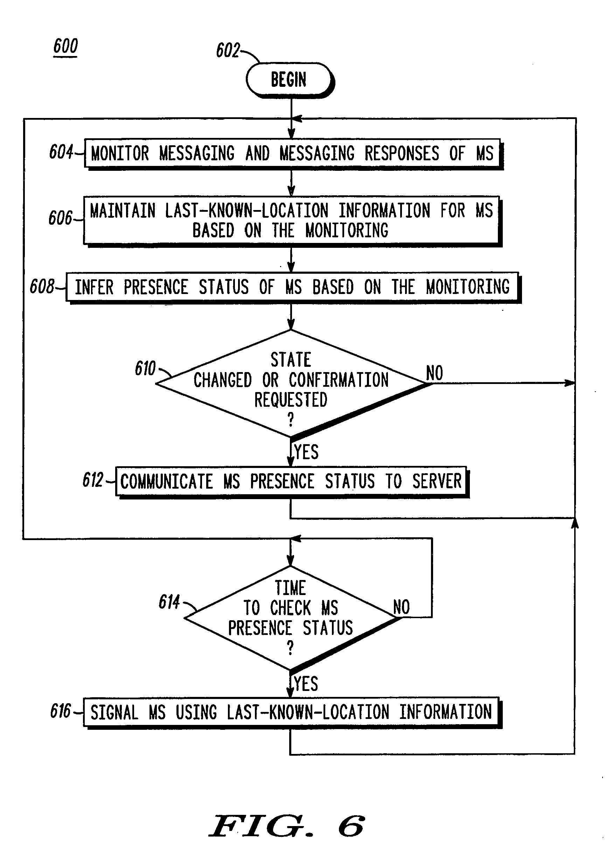

FIG. 6 is a logic flow diagram of functionality performed by a wireless communication system in accordance with a first embodiment of the present invention. Logic flow 600 begins (602) with a wireless communication network monitoring messaging and messaging responses of an MS. Based on this monitoring, the network maintains (604) last-known-location information for the MS and infers (608) the presence status of the MS. If (610) the MS presence status has changed or if a presence server has requested presence confirmation, the network communicates the inferred status of the MS to the requesting server or to those servers that need to be apprised of the new status. Logic flow 600 then returns to block 604 to continue this monitoring loop.

While performing the monitoring loop, the wireless network also awaits triggers that indicate that it is time to check the MS's presence status. Such triggers include the expiration of network presence timers and the receipt of presence server requests. When (614) a triggering event occurs, the network signals (616) the MS where indicated by the last-known-location information with messaging to which the MS is required to respond. Logic flow 600 then returns to block 614 to continue this signaling loop.

In the foregoing specification, the present invention has been described with reference to a specific embodiment. However, one of ordinary skill in the art will appreciate that various modifications and changes may be made without departing from the scope of the present invention as set forth in the appended claims. Accordingly, the specification and drawings are to be regarded in an illustrative rather than a restrictive sense, and all such modifications are intended to be included within the scope of the present invention. In addition, those of ordinary skill in the art will appreciate that the elements in the drawings are illustrated for simplicity and clarity, and have not necessarily been drawn to scale. For example, the dimensions of some of the elements in the drawings may be exaggerated relative to other elements to help improve an understanding of the various embodiments of the present invention.

Benefits, other advantages, and solutions to problems have been described above with regard to specific embodiments of the present invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims. As used herein and in the appended claims, the term "comprises," "comprising," or any other variation thereof is intended to refer to a non-exclusive inclusion, such that a process, method, article of manufacture, or apparatus that comprises a list of elements does not include only those elements in the list, but may include other elements not expressly listed or inherent to such process, method, article of manufacture, or apparatus.

The terms a or an, as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly, and not necessarily mechanically.

## Claims

1. A method comprising:
receiving (502), by a base station BS from a network equipment, an A9 short data delivery message;
signaling (503) by the BS a mobile station MS with a Short Data Burst message in response to the A9 short data delivery message;
sending (505) by the BS an A9 short data acknowledgment message to the network equipment indicating whether a response from the MS was received for the signaling of the MS by the BS.

2. The method of claim 1, wherein sending (505) by the BS an A9 short data acknowledgment message to the network equipment indicating whether a response from the MS was received comprises
in response to receiving (504) by the BS an acknowledgment from the MS in response to the signaling by the BS, sending by the BS an A9 short data acknowledgment message to the network equipment indicating that a response from the MS was received.

3. The method of claim 1, wherein the A9 short data delivery message comprises a message of a type that is used for conveying a small, limited amount of data to an MS.

4. The method of claim 1,
wherein the A9 short data delivery message indicates a signaling location within which to signal the MS and
wherein signaling (503) the MS in response to the A9 short data delivery message comprises signaling the MS in the signaling location indicated.

5. The method of claim 4, wherein the signaling location indicated comprises location information of a type from the group consisting of a cell ID, a base station ID, a list of cell IDs, and a location area code referred to as LAC.

6. A base station comprising:
means for receiving, from a network equipment, an A9 short data delivery message;
means for signaling a mobile station MS with a Short Data Message in response to the A9 short data delivery message;
means for sending an A9 short data acknowledgment message to the network equipment indicating whether a response from the MS was received for the signaling of the MS by the BS.

7. The base station of claim 6, wherein the A9 short data delivery message indicates a signaling location within which to signal the MS and wherein the means for signaling the MS in response to the A9 short data delivery message comprises means for signaling the MS in the signaling location indicated.

## Patentansprüche

1. Verfahren, umfassend:
Empfang (502) durch eine Basisstation BS von einer Netzausrüstung einer A9-Kurzdaten-Übermittlungsmeldung;
Signalisierung (503) durch die BS einer mobilen Station MS mit einer Kurzdatenburst-Meldung in Antwort auf die A9 Kurzdaten-Übermittlungsmeldung
Sendung (505) durch die BS einer A9-Kurzdaten-Bestätigungsmeldung an die Netzausrüstung, die angibt, ob eine Antwort von der MS für die Signalisierung der MS durch die BS erhalten wurde.

2. Verfahren nach Anspruch 1, wobei die Sendung (505) durch die BS einer A9-Kurzdaten-Bestätigungsmeldung an die Netzausrüstung, die angibt, ob eine Antwort von der MS erhalten wurde, Folgendes umfasst:
in Antwort auf den Empfang (504) durch die BS einer Bestätigung von der MS in Antwort auf die Signalisierung durch die BS Sendung durch die BS einer A9- Kurzdaten-Bestätigungsmeldung an die Netzausrüstung, die angibt, dass eine Antwort von der MS erhalten wurde.

3. Verfahren nach Anspruch 1, wobei die A9-Kurzdaten-Übermittlungsmeldung eine Meldung einer Art umfasst, die zur Übertragung einer kurzen, begrenzten Menge von Daten an eine MS verwendet wird.

4. Verfahren nach Anspruch 1,
wobei die A9 Kurzdaten-Übermittlungsmeldung eine Signalisierungsposition angibt, mit der die MS signalisiert wird, und
wobei die Signalisierung (503) der MS in Antwort auf die A9 Kurzdaten-Übermittlungsmeldung die Signalisierung der MS in der angegebenen Signalisierungsposition umfasst.

5. Verfahren nach Anspruch 4, wobei die angegebene Signalisierungsposition Positionsinformationen einer Art von der ersten Gruppe umfasst, bestehend aus einer Zellen-ID, einer Basistations-ID, einer Liste von Zellen-IDs und einem Positionsbereichscode, der als LAC bezeichnet wird.

6. Basisstation, umfassend:
Mittel zum Empfang von einer Netzausrüstung einer A9 Kurzdaten-Übermittlungsmeldung;
Mittel zur Signalisierung einer mobilen Station MS mit einer Kurzdatenmeldung in Antwort auf die A9 Kurzdaten-Übermittlungsmeldung;
Mittel zur Sendung einer A9-Kurzdaten-Bestätigungsmeldung an die Netzausrüstung, die angibt, ob eine Antwort von der MS für die Signalisierung der MS durch die BS erhalten wurde.

7. Basisstation nach Anspruch 6, wobei die A9 Kurzdaten-Übermittlungsmeldung eine Signalisierungsposition angibt, in der die MS signalisiert werden soll, und wobei die Mittel zur Signalisierung der MS in Antwort auf die A9 Kurzdaten-Übermittlungsmeldung Mittel für die Signalisierung der MS in der angegebenen Signalisierungsposition umfasst.

## Revendications

1. Procédé comprenant :
la réception (502), par une station de base BS en provenance d'un équipement réseau, d'un message d'acheminement de données courtes A9 ;
la signalisation (503) par la BS d'une station mobile MS avec un message de salve de données courtes en réponse au message d'acheminement de données courtes A9 ;
l'envoi (505) par la BS d'un message d'accusé de réception de données courtes A9 à l'équipement réseau indiquant si une réponse provenant de la MS a été reçue pour la signalisation de la MS par la BS.

2. Procédé selon la revendication 1, dans lequel l'envoi (505) par la BS d'un message d'accusé de réception de données courtes A9 à l'équipement réseau indiquant si une réponse provenant de la MS a été reçue comprend :
en réponse à la réception (504) par la BS d'un accusé de réception provenant de la MS en réponse à la signalisation par la BS, l'envoi par la BS d'un message d'accusé de réception de données courtes A9 à l'équipement réseau indiquant qu'une réponse provenant de la MS a été reçue.

3. Procédé selon la revendication 1, dans lequel le message d'acheminement de données courtes A9 comprend un message d'un type qui est utilisé pour le transport d'une quantité de données limitée, petite, vers une MS.

4. Procédé selon la revendication 1,
dans lequel le message d'acheminement de données courtes A9 indique un emplacement de signalisation dans lequel signaler la MS et
dans lequel la signalisation (503) de la MS en réponse au message d'acheminement de données courtes A9 comprend la signalisation de la MS dans l'emplacement de signalisation indiqué.

5. Procédé selon la revendication 4, dans lequel l'emplacement de signalisation indiqué comprend des informations d'emplacement d'un type parmi le groupe comprenant un identificateur (ID) de cellule, un ID de station de base, une liste d' ID de cellule, et un code de zone d'emplacement désigné en tant que LAC.

6. Station de base comprenant :
un moyen de réception, en provenance d'un équipement réseau, d'un message d'acheminement de données courtes A9 ;
un moyen de signalisation d'une station mobile MS avec un message de données courtes en réponse au message d'acheminement de données courtes A9 ;
un moyen d'envoi d'un message d'accusé de réception de données courtes A9 à l'équipement réseau indiquant si une réponse provenant de la MS a été reçue pour la signalisation de la MS par la BS.

7. Station de base selon la revendication 6, dans laquelle le message d'acheminement de données courtes A9 indique un emplacement de signalisation dans lequel signaler la MS et dans lequel le moyen de signalisation de la MS en réponse au message d'acheminement de données courtes A9 comprend un moyen de signalisation de la MS dans l'emplacement de signalisation indiqué.
